# EUROPEAN PATENT APPLICATION

(11) **EP 3 719 456 A1**
(43) Date of publication of application: **07.10.2020**
(21) Application number: 17933427.1
(22) Date of filing: 28.11.2017
(51) Int. Cl.: G01F 23/00

(54) **MEASUREMENT CONTROL PROGRAM, MEASUREMENT CONTROL METHOD, MEASUREMENT CONTROL DEVICE, AND MEASUREMENT CONTROL SYSTEM**

(71) Applicant: Fujitsu Limited, Kawasaki-shi, Kanagawa 211-8588 (JP)
(72) Inventor: CHIBA, Hiroshi, Kawasaki-shi, Kanagawa 211-8588 (JP); SUZUKI, Takashi, Kawasaki-shi, Kanagawa 211-8588 (JP); HIDA, Yusuke, Kawasaki-shi, Kanagawa 211-8588 (JP); NAKAGAWA, Yutaka, Kawasaki-shi, Kanagawa 211-8588 (JP)
(74) Representative: Hoffmann Eitle
(86) International application number: PCT/JP2017/042669
(87) International publication number: WO 2019/106726

(57) **Abstract**

A measurement control device (100) specifies a predicted peak value of a water level based on a prediction result for a change in the water level. The measurement control device (100) calculates a reference value of the water level at which the measurement of the water level is started, according to the specified predicted peak value. The measurement control device (100) specifies a predicted timing at which the water level is predicted to reach the calculated reference value, based on the prediction result for a change in the water level. The measurement control device (100) controls a start timing of the water level measurement by a sensor device (101) based on the specified predicted timing.

## Description

### TECHNICAL FIELD

The present invention relates to a measurement control program, a measurement control method, a measurement control device, and a measurement control system.

### BACKGROUND ART

Conventionally, there is a monitoring system that takes countermeasures against flood damage by installing a water level sensor in a river or a sewer, and monitoring the rising or overflow of the river or the sewer based on the measurement value of the water level sensor. Furthermore, in some cases, the water level sensor is configured as a battery-mounted type to achieve the simplification of the introduction work for the monitoring system.

As prior art, for example, there is a technology that predicts the amount of precipitation for each water catchment area based on a short-term predicted rainfall value, and predicts, for each water catchment area, the amount of flow of water flowing into the river from the water catchment area based on the amount of precipitation predicted for each water catchment area. In addition, for example, there is a technology that non-contactly measures the water level in a pipe from above by a water level measurement unit removably attached to a through-hole portion that is formed in a lid portion of a manhole unit and passes through in a vertical plane direction. Furthermore, for example, there is a technology that alters the frequency of data transmission in a wireless station of a sensor node according to the measurement value of the water level in a sewer pipe, or the like.

### CITATION LIST

### PATENT DOCUMENT

Patent Document 1: Japanese Laid-open Patent Publication No. 2008-50903
Patent Document 2: Japanese Laid-open Patent Publication No. 2011-42943
Patent Document 3: Japanese Laid-open Patent Publication No. 2010-203964

### SUMMARY OF INVENTION

### TECHNICAL PROBLEM

However, with the conventional technologies, the water level cannot be measured efficiently. For example, if the water level sensor is set to constantly measure the water level, the water level is continuously measured even when the weather is fine or cloudy, or when it is raining but the amount of rain does not require to monitor the rising or overflow of a river or a sewer, for example, resulting in increases in processing load and power consumption of the water level sensor.

In one aspect, an object of the present invention is to efficiently measure the water level according to the predicted value of the water level.

### SOLUTION TO PROBLEM

According to one exemplary mode, a measurement control program, a measurement control method, a measurement control device, and a measurement control system are proposed in which, when a sensor that measures a water level is controlled, a predicted peak value of the water level is specified based on a prediction result for a change in the water level; a reference value of the water level at which measurement of the water level is started is calculated according to the predicted peak value that has been specified; a timing at which the water level is predicted to reach the reference value that has been calculated is specified based on the prediction result; and a start timing of measurement of the water level by the sensor is controlled based on the timing that has been specified.

### ADVANTAGEOUS EFFECTS OF INVENTION

According to one mode, the water level can be measured efficiently according to the predicted value of the water level.

### BRIEF DESCRIPTION OF DRAWINGS

FIG. 1 is an explanatory diagram illustrating an example of a measurement control method according to an embodiment.
FIG. 2 is an explanatory diagram illustrating an example of a monitoring system 200.
FIG. 3 is a block diagram illustrating an exemplary hardware configuration of a measurement control device 100.
FIG. 4 is an explanatory diagram illustrating an example of contents stored in an actual water level table 400.
FIG. 5 is an explanatory diagram illustrating an example of contents stored in a predicted water level table 500.
FIG. 6 is an explanatory diagram illustrating an example of contents stored in an actual rain amount table 600.
FIG. 7 is an explanatory diagram illustrating an example of contents stored in a predicted rain amount table 700.
FIG. 8 is an explanatory diagram illustrating an example of contents stored in a reference value table 800.
FIG. 9 is a block diagram illustrating an exemplary hardware configuration of a sensor device 101.
FIG. 10 is a block diagram illustrating an exemplary functional configuration of the measurement control device 100.
FIG. 11 is an explanatory diagram (part 1) illustrating an example of predicting a change in water level.
FIG. 12 is an explanatory diagram (part 2) illustrating an example of predicting a change in water level.
FIG. 13 is an explanatory diagram (part 1) illustrating an example of designating a threshold value and a measurement interval.
FIG. 14 is an explanatory diagram (part 2) illustrating an example of designating a threshold value and a measurement interval.
FIG. 15 is an explanatory diagram (part 3) illustrating an example of designating a threshold value and a measurement interval.
FIG. 16 is an explanatory diagram (part 4) illustrating an example of designating a threshold value and a measurement interval.
FIG. 17 is an explanatory diagram (part 5) illustrating an example of designating a threshold value and a measurement interval.
FIG. 18 is an explanatory diagram (part 1) illustrating an example of controlling the sensor device 101.
FIG. 19 is an explanatory diagram (part 2) illustrating an example of controlling the sensor device 101.
FIG. 20 is an explanatory diagram (part 1) illustrating an example of displaying a screen.
FIG. 21 is an explanatory diagram (part 2) illustrating an example of displaying a screen.
FIG. 22 is a flowchart illustrating an example of an overall processing procedure.

### DESCRIPTION OF EMBODIMENTS

Hereinafter, embodiments of a measurement control program, a measurement control method, a measurement control device, and a measurement control system according to the present invention will be described in detail with reference to the drawings.

### (One Example of Measurement Control Method According to Embodiment)

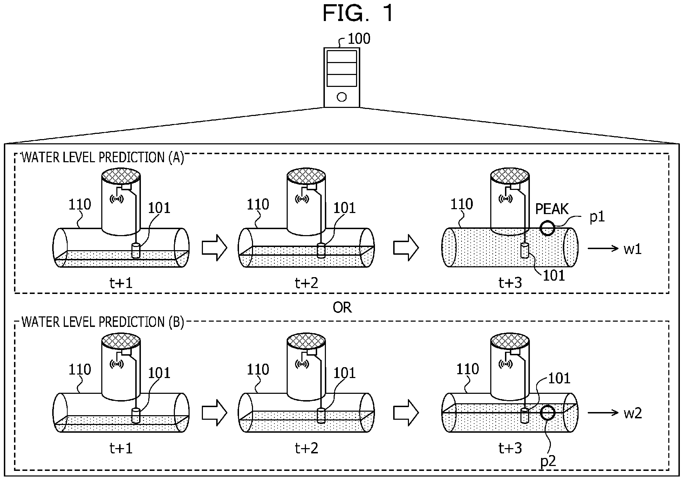

FIG. 1 is an explanatory diagram illustrating an example of a measurement control method according to an embodiment. In FIG. 1, a measurement control device 100 is a computer that controls a monitoring system. The purpose of the monitoring system is, for example, to take countermeasures against flood damage by installing a water level sensor in a river or a sewer, and monitoring the rising or overflow of the river or the sewer based on the measurement value of the water level sensor.

Here, there are cases where the water level sensor is desired to be configured as a battery-mounted type to achieve the simplification of the installation work for the monitoring system. In these cases, since the water level sensor is configured as a battery-mounted type, it is sometimes desired to achieve the reduction of the processing load, amount of communication, and power consumption of the water level sensor, and to achieve the reduction of the workload for the maintenance management of the monitoring system. Furthermore, it is preferable to achieve the reduction of the processing load, amount of communication, and power consumption of the water level sensor even if the water level sensor is not configured as a battery-mounted type. In some cases, however, the water level sensor cannot measure the water level efficiently, resulting in increases in processing load, amount of communication, and power consumption of the water level sensor.

To measure the water level efficiently means to measure the water level while suppressing increases in the processing load, amount of communication, and power consumption. To measure the water level efficiently means, for example, to make the number of times the water level is measured smaller in such a situation that there is less adverse influence on countermeasures against flood damage even without measuring the water level. Such a situation that there is less adverse influence on countermeasures against flood damage is, for example, a situation in a case where the weather is fine or cloudy, a case where it is raining but the amount of rain does not require to monitor the rising or overflow of a river or a sewer, or the like. To make the number of times the water level is measured smaller means, for example, to shorten the measurement period for the water level or to make the frequency of measurement of the water level smaller.

For example, if the water level sensor is set to constantly measure the water level, the water level sensor is caused to continuously measure the water level, for example, even when the weather is fine or cloudy, or when it is raining but the amount of rain does not require to monitor the rising or overflow of a river or a sewer. For this reason, the water level sensor will continuously measure the water level even in such a situation that there is little adverse influence on countermeasures against flood damage even without measuring the water level, resulting in increases in processing load, amount of communication, and power consumption of the water level sensor.

In contrast, it is conceivable that the water level sensor is set so as to constantly measure the water level at regular intervals, and when the measurement value of the water level exceeds a threshold value set by a user, to measure the water level at a greater frequency of measurement of the water level. However, since the water level sensor constantly measures the water level at regular intervals, the water level measurement cannot be stopped even in such a situation that the water level does not rise above a certain level and there is little adverse influence on countermeasures against flood damage even without measuring the water level. For this reason, the processing load, amount of communication, and power consumption of the water level sensor are increased as a result.

Furthermore, in the water level sensor, as the threshold value set by the user is made larger, the frequency of measurement of the water level cannot be made greater even in a situation where it is preferable to measure the water level for the purpose of countermeasures against flood damage, and it becomes difficult to take countermeasures against flood damage efficiently. Meanwhile, in the water level sensor, as the threshold value set by the user is made smaller, the frequency of measurement of the water level is more likely to be made greater in such a situation that the water level does not rise above a certain level, and there is little adverse influence on countermeasures against flood damage even without measuring the water level. For this reason, the processing load, amount of communication, and power consumption of the water level sensor are increased as a result. In addition, the user bears the workload for setting the threshold value.

In contrast, it is conceivable that the water level sensor is set so as not to measure the water level before the predicted value of the water level exceeds the threshold value set by the user, and after the predicted value of the water level exceeds the threshold value set by the user, to start measuring the water level. However, it is more difficult for the water level sensor to measure the water level efficiently as the prediction accuracy for the water level is lower.

Furthermore, as the threshold value set by the user is made larger, the water level sensor delays to start measuring the water level, and the user is slow in grasping a sudden rise in the water level, and the like; in consequence, it becomes difficult to take countermeasures against flood damage efficiently. Meanwhile, as the threshold value set by the user is made smaller, the water level sensor is caused to start measuring the water level even in such a situation that the water level does not rise above a certain level, and there is little adverse influence on countermeasures against flood damage even without measuring the water level. For this reason, the processing load, amount of communication, and power consumption of the water level sensor are increased as a result. In addition, the user bears the workload for setting the threshold value.

Accordingly, it is preferable that the water level sensor be kept stopped from measuring the water level in accordance with the situation. Furthermore, when the water level sensor is caused to start measuring the water level, it is preferable to make the number of times the water level is measured smaller as flood damage is less likely to occur, and to achieve the reduction of the processing load, amount of communication, and power consumption of the water level sensor. On the other hand, when the water level sensor is caused to start measuring the water level, it is preferable to make the number of times the water level is measured greater as flood damage is more likely to occur, and to achieve the improvement in efficiency of countermeasures against flood damage.

Thus, in the present embodiment, a measurement control method will be described in which a reference value according to a predicted peak value of the water level is calculated based on a prediction result for a change in water level, and a start timing of the water level measurement is controlled based on a predicted timing at which the water level reaches the reference value. According to this embodiment, for example, the measurement control method can control the start timing of the water level measurement according to the degree of likelihood of the occurrence of flood damage, and can measure the water level efficiently, whereby countermeasures against flood damage can be taken efficiently.

In the example in FIG. 1, the monitoring system includes a sensor device 101. The sensor device 101 is a computer that operates as a water level sensor and measures the water level at a target location. The target location corresponds to a location where the sensor device 101 is installed. The target location is, for example, a river or a sewer. The target location is, specifically, a pipe 110. The measurement control device 100 is connected to the sensor device 101 so as to be able to communicate with each other.

The measurement control device 100 specifies the predicted peak value of the water level based on a prediction result for a change in water level. The unit of the water level is, for example, centimeter (cm). The prediction result for a change in water level is a collection of predicted values of the water level for every certain time. The measurement control device 100, for example, predicts a change in water level in a certain period based on the amount of rain, and specifies a predicted peak value of the water level in the certain period based on a prediction result for the change in water level.

In the example in FIG. 1, the prediction result for a change in water level is a collection of predicted values of the water level at time points t+1, t+2, and t+3, and is given as a prediction result A or a prediction result B. The reference sign t denotes the current time. If the prediction result for a change in water level is given as the prediction result A, the measurement control device 100 specifies a predicted peak value p1 of the water level. Furthermore, if the prediction result for a change in water level is given as the prediction result B, the measurement control device 100 specifies a predicted peak value p2 of the water level.

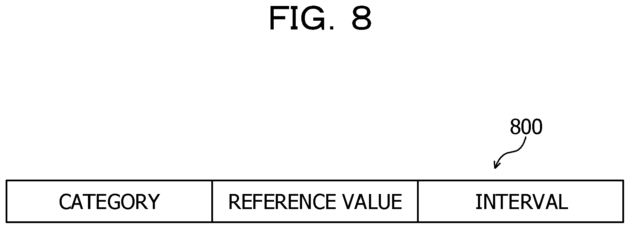

The measurement control device 100 calculates a reference value of the water level at which the measurement of the water level is started, according to the specified predicted peak value. The measurement control device 100 calculates a reference value corresponding to the specified predicted peak value, for example, based on information representing a relationship between the predicted peak value and the reference value. The information representing the relationship between the predicted peak value and the reference value is, for example, a reference value table 800 described later with reference to FIG. 8. The relationship between the predicted peak value and the reference value has, for example, a relationship in which the larger the predicted peak value is, the smaller the reference value is.

In the example in FIG. 1, when the predicted peak value p1 is specified, the measurement control device 100 calculates a reference value w1 corresponding to the specified predicted peak value p1. Furthermore, when the predicted peak value p2 is specified, the measurement control device 100 calculates a reference value w2 corresponding to the specified predicted peak value p2. The reference value w1 is, for example, smaller than the reference value w2.

Here, the predicted peak value of the water level serves as, on the one hand, an index value for evaluating the degree of likelihood of the occurrence of flood damage. The predicted peak value of the water level represents, for example, that the larger the value is, the higher the likelihood of overflow is. In addition, the predicted peak value of the water level represents, for example, that the larger the value is, the more flood damage is likely to occur in a case where a difference is produced between the prediction result for the water level and the actual transition result of the water level.

For this reason, the measurement control device 100 can control the reference value of the water level at which the measurement of the water level is started, according to the degree of likelihood of the occurrence of flood damage. The measurement control device 100 can control, for example, such that the more flood damage is likely to occur, the smaller the reference value of the water level at which the measurement of the water level is started, and the less flood damage is likely to occur, the larger the reference value of the water level at which the measurement of the water level is started.

The measurement control device 100 specifies a predicted timing at which the water level is predicted to reach the calculated reference value, based on the prediction result. In the example in FIG. 1, when the reference value w1 is calculated, the measurement control device 100 specifies a predicted timing t+1 at which the calculated reference value w1 is predicted to be reached. Furthermore, when the reference value w2 is calculated, the measurement control device 100 specifies a predicted timing t+2 at which the calculated reference value w2 is predicted to be reached.

The measurement control device 100 controls the start timing of the water level measurement by the sensor device 101 based on the specified predicted timing. The measurement control device 100, for example, determines whether or not the specified predicted timing has come, and when the specified predicted timing has come, transmits a start instruction for the water level measurement to the sensor device 101, thereby controlling the start timing of the water level measurement by the sensor device 101.

In the example in FIG. 1, when the predicted timing t+1 is specified, the measurement control device 100 transmits a start instruction for the water level measurement to the sensor device 101 when the predicted timing t+1 has come, and causes the sensor device 101 to start measuring the water level. Furthermore, when the predicted timing t+2 is specified, the measurement control device 100 transmits a start instruction for the water level measurement to the sensor device 101 when the predicted timing t+2 has come, and causes the sensor device 101 to start measuring the water level.

With this control, the measurement control device 100 can efficiently measure the water level. The measurement control device 100, for example, can suppress adverse influence on countermeasures against flood damage by keeping the measurement of the water level stopped, and also can suppress increases in the processing load, amount of communication, and power consumption of the sensor device 101. In addition, the measurement control device 100 can achieve the reduction of the amount of use of the storage area of the sensor device 101. Furthermore, the measurement control device 100 can achieve the reduction of the amount of use of a storage area for storing the measurement value of the water level acquired from the sensor device 101. For this reason, the measurement control device 100 can achieve the reduction of the workload for the maintenance management of the monitoring system.

The measurement control device 100, specifically, can make the number of times the water level is measured smaller, in such a situation that there is less adverse influence on countermeasures against flood damage even without measuring the water level, according to the predicted peak value of the water level that serves as an index value for evaluating the degree of likelihood of the occurrence of flood damage. The measurement control device 100 shortens the measurement period for the water level or makes the frequency of measurement of the water level smaller to make the number of times the water level is measured smaller.

The sensor device 101 does not need to constantly measure the water level, and can be kept stopped from measuring the water level in such a situation that the water level does not rise above a certain level, and there is little adverse influence on countermeasures against flood damage even without measuring the water level. Then, the sensor device 101 can suppress increases in the processing load, amount of communication, and power consumption. Furthermore, the sensor device 101 can achieve the reduction of the amount of use of the storage area.

In a situation where it is preferable to measure the water level for the purpose of countermeasures against flood damage, the sensor device 101 can hasten the start of the water level measurement or make the frequency of measurement of the water level greater. For this reason, the sensor device 101 can allow the user to grasp a sudden rise in the water level, and the like, such that countermeasures against flood damage can be taken efficiently. Furthermore, even if a difference is produced between the prediction result for a change in water level and the actual transition result of the water level, countermeasures against flood damage can be taken efficiently with the sensor device 101.

Here, the case where the measurement control device 100 predicts a change in water level has been described, but the present invention is not limited to this. For example, there may be a case where a device different from the measurement control device 100 predicts a change in water level. In this case, the measurement control device 100 acquires the prediction result for a change in water level from, for example, a device that predicted the change in water level.

Here, the case where the relationship between the predicted peak value and the reference value has a relationship in which the larger the predicted peak value is, the smaller the reference value is has been described, but the present invention is not limited to this. For example, there may be a case where the relationship between the predicted peak value and the reference value has a relationship in which the reference value becomes larger when the predicted peak value is zero to a certain value, and the reference value becomes smaller when the predicted peak value is larger than the certain value.

Here, the case where the measurement control device 100 transmits a start instruction for the water level measurement to the sensor device 101 has been described, but the present invention is not limited to this. For example, there may be a case where the measurement control device 100 transmits information indicating the specified predicted timing to the sensor device 101, and causes the sensor device 101 to determine whether or not the specified predicted timing has come, and to start measuring the water level.

### (Example of Monitoring System 200)

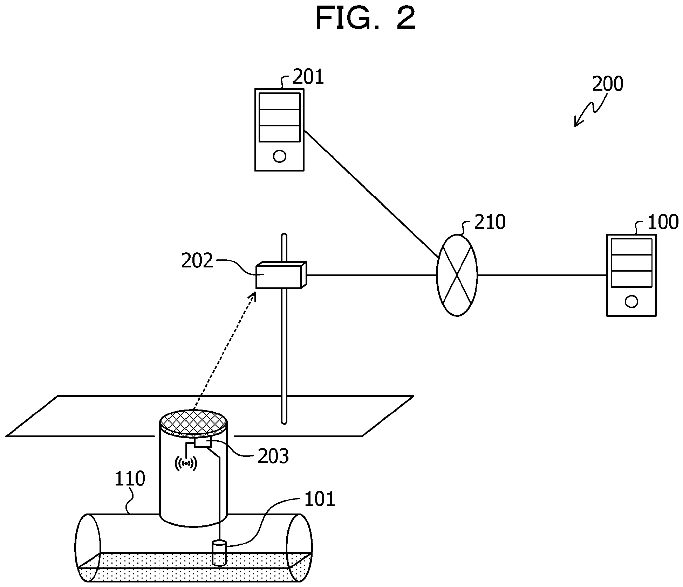

Next, an example of a monitoring system 200 to which the measurement control device 100 illustrated in FIG. 1 is applied will be described with reference to FIG. 2.

FIG. 2 is an explanatory diagram illustrating an example of the monitoring system 200. In FIG. 2, the monitoring system 200 includes the measurement control device 100, an information accumulation device 201, a communication relay device 202, a wireless communication device 203, and the sensor device 101.

In the monitoring system 200, the measurement control device 100, the information accumulation device 201, and the communication relay device 202 are connected via a wired or wireless network 210. Examples of the network 210 include a local area network (LAN), a wide area network (WAN), the Internet, and the like. Furthermore, in the monitoring system 200, the communication relay device 202 and the wireless communication device 203 are wirelessly connected. In addition, in the monitoring system 200, the wireless communication device 203 and the sensor device 101 are connected by wire.

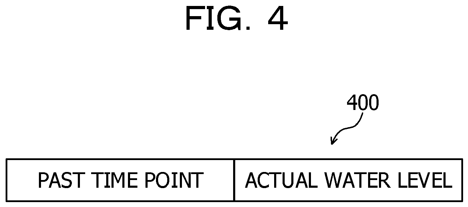

The measurement control device 100 stores various tables described later with reference to FIGS. 4 to 8, and controls the sensor device 101. The measurement control device 100, for example, predicts a change in water level by utilizing various tables described later with reference to FIGS. 4 to 7, and specifies the predicted peak value. For example, the measurement control device 100 calculates the reference value, specifies the predicted timing, and controls the start timing of the water level measurement by utilizing the reference value table 800 described later with reference to FIG. 8. The measurement control device 100 may control the frequency of measurement of the water level. The measurement control device 100 may control an end timing of measurement of the water level. Examples of the measurement control device 100 include a server, a personal computer (PC), and the like.

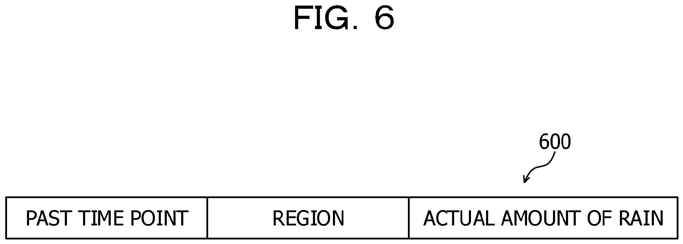

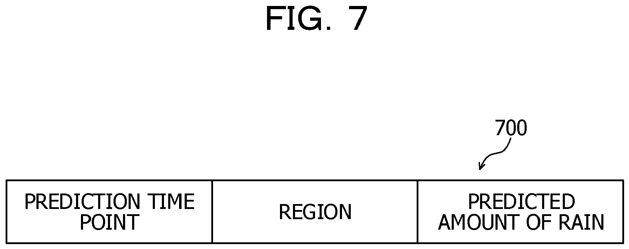

The information accumulation device 201 is a computer that stores weather information and provides the weather information to the measurement control device 100. The information accumulation device 201 provides, for example, an actual rain amount table 600 described later with reference to FIG. 6, a predicted rain amount table 700 described later with reference to FIG. 7, and the like, to the measurement control device 100 as weather information. Examples of the information accumulation device 201 include a server, a PC, and the like. The communication relay device 202 is a computer that relays communication between the measurement control device 100 and the sensor device 101 via the wireless communication device 203. The wireless communication device 203 is a computer that relays communication between the communication relay device 202 and the sensor device 101.

The sensor device 101 is a computer that operates as a water level sensor and measures the water level at a target location. The target location corresponds to a location where the sensor device 101 is installed. The target location is, for example, a river or a sewer. The target location is, specifically, the pipe 110. The sensor device 101 stops measuring the water level or starts measuring the water level, for example, under the control of the measurement control device 100. Furthermore, the sensor device 101 alters the frequency of measurement of the water level, for example, under the control of the measurement control device 100. In addition, for example, similarly to the measurement of the water level, the sensor device 101 may stop measuring an object other than the water level, start measuring an object other than the water level, or alter the frequency of measurement of an object other than the water level. The object other than the water level is, for example, the flow velocity.

Here, the case where the monitoring system 200 includes one sensor device 101 has been described, but the present invention is not limited to this. For example, there may be a case where the monitoring system 200 includes two or more sensor devices 101. In this case, the monitoring system 200 may include the measurement control device 100 that controls the sensor device 101 for each sensor device 101.

Here, the case where the measurement control device 100 is a device different from the information accumulation device 201 has been described, but the present invention is not limited to this. For example, there may be a case where the measurement control device 100 is operable as the information accumulation device 201. In this case, the monitoring system 200 may not include the information accumulation device 201.

Here, the case where the sensor device 101 communicates with the measurement control device 100 via the wireless communication device 203 and the communication relay device 202 has been described, but the present invention is not limited to this. For example, there may be a case where the sensor device 101 can communicate with the measurement control device 100 not via the wireless communication device 203 and the communication relay device 202.

Here, the case where the measurement control device 100 predicts a change in water level, specifies the predicted peak value, calculates the reference value, specifies the predicted timing, and controls the start timing of the water level measurement has been described, but the present invention is not limited to this. For example, there may be a case where the prediction of a change in water level, the specification of the predicted peak value, the calculation of the reference value, the specification of the predicted timing, and the control of the start timing of the water level measurement are implemented by the cooperation between two or more devices in a cloud system.

### (Exemplary Hardware Configuration of Measurement Control Device 100)

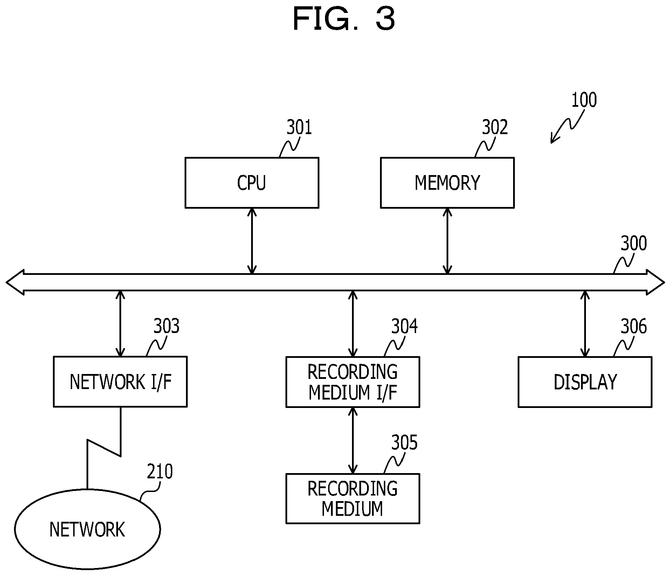

Next, an exemplary hardware configuration of the measurement control device 100 will be described with reference to FIG. 3.

FIG. 3 is a block diagram illustrating an exemplary hardware configuration of the measurement control device 100. In FIG. 3, the measurement control device 100 includes a central processing unit (CPU) 301, a memory 302, a network interface (I/F) 303, a recording medium I/F 304, a recording medium 305, and a display 306. Furthermore, each of those components is interconnected by a bus 300.

Here, the CPU 301 integrally controls the measurement control device 100. The memory 302 includes, for example, a read only memory (ROM), a random access memory (RAM), a flash ROM, and the like. Specifically, for example, the flash ROM or the ROM stores various programs, while the RAM is used as a work area for the CPU 301. A program stored in the memory 302 is loaded into the CPU 301 to cause the CPU 301 to execute coded processing.

The network I/F 303 is connected to the network 210 through a communication line, and is connected to another computer via the network 210. Then, the network I/F 303 manages an interface between the network 210 and an inside, and controls input-output of data from another computer. For example, a modem, a LAN adapter, or the like, can be employed as the network I/F 303.

The recording medium I/F 304 controls read/write of data to/from the recording medium 305 under the control of the CPU 301. Examples of the recording medium I/F 304 include a disk drive, a solid state drive (SSD), a universal serial bus (USB) port, and the like. The recording medium 305 is a nonvolatile memory that stores data written under the control of the recording medium I/F 304. Examples of the recording medium 305 include a disk, a semiconductor memory, a USB memory, and the like. The recording medium 305 may be removably installed on the measurement control device 100.

The display 306 displays data such as a document, an image, and function information, as well as a cursor, an icon or a tool box. Examples of the display 306 include a cathode ray tube (CRT), a liquid crystal display, an organic electroluminescence (EL) display, and the like. The display 306 may be, for example, a touch panel and have a function as an input device.

The measurement control device 100 may further include, for example, a keyboard, a mouse, a printer, a scanner, a microphone, a speaker, or the like, in addition to the components described above. Furthermore, the measurement control device 100 may include a plurality of the recording medium I/Fs 304 and the recording media 305. In addition, it is not necessary for the measurement control device 100 to include the recording medium I/F 304 and the recording medium 305. Besides, it is not necessary for the measurement control device 100 to include the display 306.

### (Contents Stored in Actual Water Level Table 400)

Next, the contents stored in an actual water level table 400 will be described with reference to FIG. 4. The actual water level table 400 is implemented by a storage area such as the memory 302 or the recording medium 305 of the measurement control device 100 illustrated in FIG. 3, for example.

FIG. 4 is an explanatory diagram illustrating an example of contents stored in the actual water level table 400. As illustrated in FIG. 4, the actual water level table 400 has fields of a past time point and an actual water level. In the actual water level table 400, actual water level information is stored as a record by setting information in each field for each past time point.

In the field of the past time point, a time point at which the sensor device 101 measured the water level in the past is set as a past time point. In the field of the actual water level, the measurement value of the water level by the sensor device 101 at the past time point is set as an actual water level. The unit of the measurement value of the water level is, for example, centimeter (cm). The unit of the measurement value of the water level may be, for example, percentage (%).

### (Contents Stored in Predicted Water Level Table 500)

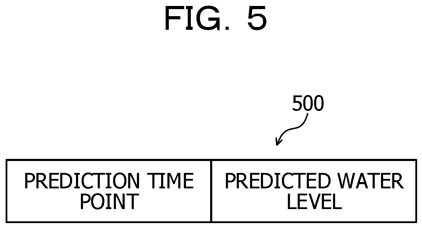

Next, the contents stored in a predicted water level table 500 will be described with reference to FIG. 5. The predicted water level table 500 is implemented by a storage area such as the memory 302 or the recording medium 305 of the measurement control device 100 illustrated in FIG. 3, for example.

FIG. 5 is an explanatory diagram illustrating an example of contents stored in the predicted water level table 500. As illustrated in FIG. 5, the predicted water level table 500 has fields of a prediction time point and a predicted water level. In the predicted water level table 500, predicted water level information is stored as a record by setting information in each field for each prediction time point.

In the field of the prediction time point, a prediction time point indicating at what time point the water level was predicted is set. In the field of the predicted water level, the predicted value of the water level at the prediction time point is set as a predicted water level. The unit of the predicted value of the water level is, for example, centimeter (cm). The unit of the predicted value of the water level may be, for example, percentage (%).

### (Contents Stored in Actual Rain Amount Table 600)

Next, the contents stored in an actual rain amount table 600 will be described with reference to FIG. 6. The actual rain amount table 600 is implemented by a storage area such as the memory 302 or the recording medium 305 of the measurement control device 100 illustrated in FIG. 3, for example.

FIG. 6 is an explanatory diagram illustrating an example of contents stored in the actual rain amount table 600. As illustrated in FIG. 6, the actual rain amount table 600 has fields of a past time point, a region, and an actual amount of rain. In the actual rain amount table 600, information on the actual amount of rain is stored as a record by setting information in each field for each past time point.

In the field of the past time point, any time point in the past is set as a past time point. In the field of the region, information indicating any region out of a plurality of regions divided in a mesh pattern is set. In the field of the actual amount of rain, the measurement value of the amount of rain in the region at the past time point is set as an actual amount of rain. The unit of the measurement value of the amount of rain is, for example, the rainfall intensity. The unit of the measurement value of the amount of rain is, for example, millimeters per hour (mm/h).

### (Contents Stored in Predicted Rain Amount Table 700)

Next, the contents stored in a predicted rain amount table 700 will be described with reference to FIG. 7. The predicted rain amount table 700 is implemented by a storage area such as the memory 302 or the recording medium 305 of the measurement control device 100 illustrated in FIG. 3, for example.

FIG. 7 is an explanatory diagram illustrating an example of contents stored in the predicted rain amount table 700. As illustrated in FIG. 7, the predicted rain amount table 700 has fields of a prediction time point, a region, and a predicted amount of rain. In the predicted rain amount table 700, information on the predicted amount of rain is stored as a record by setting information in each field for each prediction time point.

In the field of the prediction time point, a prediction time point indicating at what time point the amount of rain was predicted is set. In the field of the region, information indicating any region out of a plurality of regions divided in a mesh pattern is set. In the field of the predicted amount of rain, the predicted value of the amount of rain in the region at the prediction time point is set as a predicted amount of rain. The unit of the predicted value of the amount of rain is, for example, the rainfall intensity. The unit of the predicted value of the amount of rain is, for example, millimeters per hour (mm/h).

### (Contents Stored in Reference Value Table 800)

Next, the contents stored in a reference value table 800 will be described with reference to FIG. 8. The reference value table 800 is implemented by a storage area such as the memory 302 or the recording medium 305 of the measurement control device 100 illustrated in FIG. 3, for example.

FIG. 8 is an explanatory diagram illustrating an example of contents stored in the reference value table 800. As illustrated in FIG. 8, the reference value table 800 has fields of a category, a reference value, and an interval. In the reference value table 800, reference value information is stored as a record by setting information in each field for each category.

In the field of the category, information indicating the range of the predicted peak value is set as a category. In the field of the reference value, a corresponding reference value is set in a case where the predicted peak value is contained in the range indicated by the category. In the field of the interval, a corresponding interval is set in a case where the predicted peak value is contained in the range indicated by the category.

### (Exemplary Hardware Configuration of Sensor Device 101)

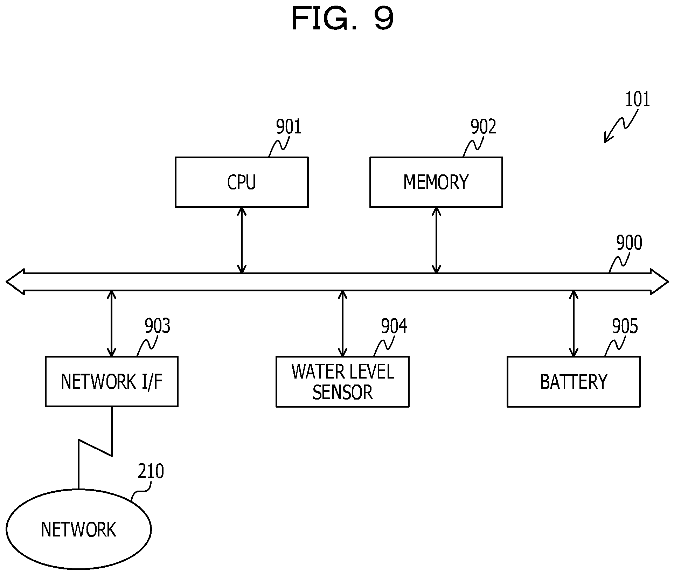

Next, an exemplary hardware configuration of the sensor device 101 will be described with reference to FIG. 9.

FIG. 9 is a block diagram illustrating an exemplary hardware configuration of the sensor device 101. In FIG. 9, the sensor device 101 includes a CPU 901, a memory 902, a network I/F 903, a water level sensor 904, and a battery 905. Furthermore, each of those components is interconnected by a bus 900.

Here, the CPU 901 integrally controls the sensor device 101. The memory 902 includes, for example, a ROM, a RAM, a flash ROM, and the like. Specifically, for example, the flash ROM or the ROM stores various programs, while the RAM is used as a work area for the CPU 901. A program stored in the memory 902 is loaded into the CPU 901 to cause the CPU 901 to execute coded processing.

The network I/F 903 is connected to the wireless communication device 203 through a communication line, and is connected to another computer via the wireless communication device 203. Then, the network I/F 903 manages an interface between the wireless communication device 203 and an inside, and controls input-output of data from another computer. For example, a modem, a LAN adapter, or the like, can be employed as the network I/F 903.

The water level sensor 904 measures the water level. The water level sensor 904 is, for example, a pressure sensor, and measures the water level by utilizing the fact that the water amount grows as the water level is heightened and the pressure applied to the water level sensor 904 grows. The water level sensor 904 may include, for example, a light emitting unit and a light receiving unit, so as to measure the water level by measuring the distance to the water surface. The battery 905 supplies electric power as a driving power supply for each unit of the sensor device 101. The battery 905 may include a harvester so as to be capable of generating power based on a change in energy of the external environment at a location where the sensor device 101 is installed. Examples of the external environment include light, vibration, temperature, a radio wave, and the like. Furthermore, the sensor device 101 may include a sensor that measures an object other than the water level.

### (Exemplary Hardware Configuration of Information Accumulation Device 201)

The exemplary hardware configuration of the information accumulation device 201 is similar to the exemplary hardware configuration of the measurement control device 100 illustrated in FIG. 3, and thus the description will be omitted.

### (Exemplary Functional Configuration of Measurement Control Device 100)

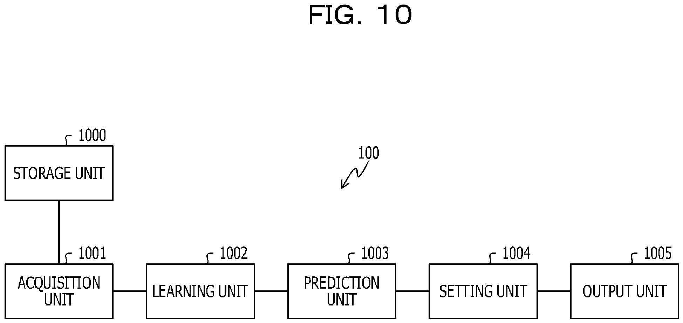

Next, an exemplary functional configuration of the measurement control device 100 will be described with reference to FIG. 10.

FIG. 10 is a block diagram illustrating an exemplary functional configuration of the measurement control device 100. The measurement control device 100 includes a storage unit 1000, an acquisition unit 1001, a learning unit 1002, a prediction unit 1003, a setting unit 1004, and an output unit 1005.

For example, the storage unit 1000 is implemented by a storage area such as the memory 302 or the recording medium 305 illustrated in FIG. 3. Hereinafter, the case where the storage unit 1000 is included in the measurement control device 100 will be described, but the present invention is not limited to this. For example, there may be a case where the storage unit 1000 is included in a device different from the measurement control device 100, and the contents stored in the storage unit 1000 can be referred to from the measurement control device 100.

The acquisition unit 1001 to the output unit 1005 are functions to be a controller. Specifically, for example, the acquisition unit 1001 to the output unit 1005 implement functions thereof by causing the CPU 301 to execute a program stored in the storage area such as the memory 302 or the recording medium 305 illustrated in FIG. 3, or by the network I/F 303. A processing result of each functional unit is stored in the storage area such as the memory 302 or the recording medium 305, illustrated in FIG. 3, for example.

The storage unit 1000 stores various types of information used for processing of each functional unit. The storage unit 1000 stores various types of information referred to or updated in processing of each functional unit. The storage unit 1000 may store the measurement value of the water level, the predicted value of the water level, and the like. The water level is represented, for example, by a length from the bottom to the water surface at the target location. The water level may be represented, for example, by the pipe fullness rate. The storage unit 1000 may store, for example, the actual water level table 400 illustrated in FIG. 4, the predicted water level table 500 illustrated in FIG. 5, and the like. The storage unit 1000 may store the measurement value of the amount of rain, the predicted value of the amount of rain, and the like. The storage unit 1000 may store, for example, the actual rain amount table 600 illustrated in FIG. 6, the predicted rain amount table 700 illustrated in FIG. 7, and the like.

The storage unit 1000 may store correspondence information representing a relationship between the predicted peak value and a first reference value. The predicted peak value is the maximum value among the predicted values of the water level for a certain period. The first reference value is a reference value of the water level at which the measurement of the water level is started. The correspondence information represents, for example, that the larger the predicted peak value is, the lower the first reference value is. The correspondence information is, specifically, a mathematical expression representing a relationship between the predicted peak value and the first reference value.

Specifically, the correspondence information may be information in which, among a plurality of ranges that do not overlap each other, a range with a relatively smaller upper limit value is associated with a relatively larger first reference value. The upper limit value of each of the plurality of ranges is a value that is at least larger than the maximum value of the measurement value of the water level in fine weather or cloudy weather. The storage unit 1000 may store, for example, the reference value table 800 illustrated in FIG. 8.

The storage unit 1000 may store correspondence information representing a relationship between the predicted peak value and a second reference value. The second reference value is a reference value of the water level at which the measurement of the water level is ended. The first reference value and the second reference value may be the same. The correspondence information represents, for example, that the larger the predicted peak value is, the lower the second reference value is. The correspondence information is, specifically, a mathematical expression representing a relationship between the predicted peak value and the second reference value.

Specifically, the correspondence information may be information in which, among a plurality of ranges that do not overlap each other, a range with a relatively smaller upper limit value is associated with a relatively larger second reference value. The upper limit value of each of the plurality of ranges is a value that is at least larger than the maximum value of the measurement value of the water level in fine weather or cloudy weather. The storage unit 1000 may store, for example, the reference value table 800 illustrated in FIG. 8.

The storage unit 1000 may store correspondence information representing a relationship between the predicted peak value and the frequency of measurement. The frequency of measurement is a frequency at which the water level is measured. The frequency is the number of times the water level is measured per unit time. The frequency of measurement may be represented by a measurement interval. The correspondence information represents, for example, that the larger the predicted peak value is, the greater the frequency of measurement is. The correspondence information is, specifically, a mathematical expression representing a relationship between the predicted peak value and the frequency of measurement.

Specifically, the correspondence information may be information in which, among a plurality of ranges that do not overlap each other, a range with a relatively smaller upper limit value is associated with a relatively larger measurement interval indicating a relatively smaller frequency of measurement. The upper limit value of each of the plurality of ranges is a value that is at least larger than the maximum value of the measurement value of the water level in fine weather or cloudy weather. The storage unit 1000 may store, for example, the reference value table 800 illustrated in FIG. 8.

The storage unit 1000 may store rules for learning a prediction model. The prediction model is a model representing a relationship between the water level and the amount of rain. The prediction model is, for example, a mathematical expression model. The mathematical expression model is, for example, a function representing a relationship between the water level and the amount of rain. The prediction model is used, for example, to predict a change in water level. The storage unit 1000 may store the learned prediction model.

The acquisition unit 1001 outputs various types of information used for processing of each functional unit to each functional unit. The acquisition unit 1001 may acquire, for example, various types of information used for processing of each functional unit from the storage unit 1000, and output the acquired information to each functional unit. The acquisition unit 1001 may acquire, for example, various types of information used for processing of each functional unit from a device different from the measurement control device 100, and output the acquired information to each functional unit.

The learning unit 1002 learns the prediction model. The learning unit 1002 learns the prediction model based on, for example, past water level and amount of rain. The learning unit 1002 learns, as a prediction model, a mathematical expression model that calculates a water level at a first time point by multiplying the amount of rain in one or more regions at one or more time points before the first time point by a coefficient and summing up the results, by machine learning. Consequently, the learning unit 1002 can make the water level predictable with reference to the prediction model.

The prediction unit 1003 predicts a change in water level. The prediction unit 1003 predicts a change in water level based on, for example, the predicted value of the amount of rain with reference to the prediction model learned by the learning unit 1002. Specifically, the prediction unit 1003 calculates a predicted value of the water level at each time point out of one or more time points within a certain period, and stores the calculated predicted value using the predicted water level table 500.

The prediction unit 1003 may predict a change in water level based on, for example, the measurement value of the amount of rain with reference to the prediction model learned by the learning unit 1002. The prediction unit 1003 may predict a change in water level based on, for example, the measurement value of the amount of rain and the predicted value of the amount of rain with reference to the prediction model learned by the learning unit 1002.

The prediction unit 1003 specifies the predicted peak value of the water level based on the prediction result for a change in water level. The prediction unit 1003 specifies, for example, the maximum value among the predicted values of the water level at respective time points of one or more time points stored in the predicted water level table 500, as the predicted peak value of the water level. Consequently, the prediction unit 1003 can specify the predicted peak value of the water level that serves an index value for evaluating the degree of likelihood of the occurrence of flood damage, and can allow the specified predicted peak value to be utilized for controlling the measurement of the water level by the sensor device 101.

The setting unit 1004 calculates the first reference value of the water level according to the specified predicted peak value. For example, the setting unit 1004 calculates the first reference value such that the larger the predicted peak value is, the lower the first reference value is. Specifically, the setting unit 1004 calculates the first reference value associated with a range containing the specified predicted peak value, based on the correspondence information stored in the storage unit 1000.

Consequently, the setting unit 1004 can hasten the start timing at which the measurement of the water level is started, as flood damage is more likely to occur. Furthermore, the setting unit 1004 can delay the start timing at which the measurement of the water level is started, as flood damage is less likely to occur.

The setting unit 1004 calculates the second reference value of the water level according to the specified predicted peak value. For example, the setting unit 1004 calculates the second reference value such that the larger the predicted peak value is, the lower the second reference value is. Specifically, the setting unit 1004 calculates the second reference value associated with a range containing the specified predicted peak value, based on the correspondence information stored in the storage unit 1000.

Consequently, the setting unit 1004 can delay the end timing at which the measurement of the water level is ended, as flood damage is more likely to occur. Furthermore, the setting unit 1004 can hasten the end timing at which the measurement of the water level is ended, as flood damage is less likely to occur.

The setting unit 1004 specifies a predicted timing at which the water level is predicted to reach the calculated first reference value, based on the prediction result. Then, the setting unit 1004 controls the start timing of the water level measurement by the sensor device 101 based on the specified predicted timing.

The setting unit 1004, for example, monitors whether or not the predicted timing has passed, and in response to the predicted timing having passed, transmits a start instruction for the water level measurement to the sensor device 101, thereby controlling the start timing of the water level measurement by the sensor device 101. For example, by transmitting the predicted timing to the sensor device 101, the setting unit 1004 may cause the sensor device 101 to monitor whether or not the predicted timing has passed, and to start measuring the water level in response to the predicted timing having passed.

Consequently, the setting unit 1004 can start measuring the water level earlier as flood damage is more likely to occur, such that countermeasures against flood damage can be taken efficiently. Furthermore, the setting unit 1004 can start measuring the water level later as flood damage is less likely to occur, and thus can achieve the reduction of the processing load, amount of communication, and power consumption of the sensor device 101.

The setting unit 1004 controls the end timing of the water level measurement by the sensor device 101 based on the measurement value of the water level by the sensor device 101. The setting unit 1004 controls the end timing based on, for example, a timing at which the measurement value falls below the calculated second reference value.

Specifically, the setting unit 1004 acquires the measurement value of the water level from the sensor device 101 every time the water level is measured by the sensor device 101. The setting unit 1004 determines whether or not the acquired measurement value of the water level has fallen below the second reference value, and in response to the measurement value having fallen below the second reference value, transmits an end instruction for the water level measurement to the sensor device 101, thereby controlling the end timing of the water level measurement by the sensor device 101. Specifically, by transmitting the second reference value to the sensor device 101, the setting unit 1004 may cause the sensor device 101 to monitor whether or not the measurement value of the water level has fallen below the second reference value, and to end measuring the water level in response to the measurement value having fallen below the second reference value.

Consequently, the setting unit 1004 can end measuring the water level later as flood damage is more likely to occur, such that countermeasures against flood damage can be taken efficiently. Furthermore, the setting unit 1004 can end measuring the water level earlier as flood damage is less likely to occur, and thus can achieve the reduction of the processing load, amount of communication, and power consumption of the sensor device 101.

The setting unit 1004 controls the frequency of measurement of the water level by the sensor device 101 according to the specified predicted peak value. For example, the setting unit 1004 makes the frequency of measurement of the water level by the sensor device 101 higher as the predicted peak value is larger. Specifically, the setting unit 1004 calculates a measurement interval associated with a range containing the specified predicted peak value, based on the correspondence information stored in the storage unit 1000. Then, the setting unit 1004 controls the frequency of measurement of the water level by the sensor device 101 by transmitting the calculated measurement interval to the sensor device 101.

Consequently, the setting unit 1004 can make the frequency of measurement of the water level greater as flood damage is more likely to occur, such that countermeasures against flood damage can be taken efficiently. Furthermore, the setting unit 1004 can make the frequency of measurement of the water level smaller as flood damage is less likely to occur, and thus can achieve the reduction of the processing load, amount of communication, and power consumption of the sensor device 101.

The setting unit 1004 may calculate the predicted power consumption of the sensor device 101 based on statistical information on a change in water level during a certain period. Consequently, the setting unit 1004 can allow the user to grasp the power consumption of the sensor device 101, and can facilitate the user to decide the maintenance management schedule for the monitoring system 200.

The output unit 1005 transmits various types of information to the sensor device 101 under the control of the setting unit 1004. The output unit 1005 transmits, for example, the start instruction to the sensor device 101. The output unit 1005 may transmit, to the sensor device 101, a predicted timing at which the water level is predicted to reach the first reference value, for example. The output unit 1005 transmits, for example, the end instruction to the sensor device 101. The output unit 1005 may transmit the second reference value to the sensor device 101, for example. The output unit 1005 transmits, for example, the measurement interval to the sensor device 101.

The output unit 1005 may output the processing result of each functional unit. The output is implemented as display on a display, print output to a printer, transmission to an external device by the network I/F 303, or storage to the storage area such as the memory 302 and the recording medium 305, for example. The output unit 1005 may output, for example, the calculated predicted power consumption. Consequently, the output unit 1005 can allow the user to be notified of the processing result of each functional unit, and can support the management and administration of the measurement control device 100, such as updating the set value of the measurement control device 100, for example, whereby the improvement in convenience of the measurement control device 100 can be achieved.

Here, the case where the setting unit 1004 controls the start timing of the water level measurement by the sensor device 101, the end timing of the water level measurement by the sensor device 101, and the frequency of measurement of the water level by the sensor device 101 has been described, but the present invention is not limited to this. For example, there may be a case where the setting unit 1004 does not control any of the start timing of the water level measurement by the sensor device 101, the end timing of the water level measurement by the sensor device 101, and the frequency of measurement of the water level by the sensor device 101.

Here, the case where the measurement control device 100 includes the acquisition unit 1001 to the output unit 1005 has been described, but the present invention is not limited to this. For example, there may be a case where the measurement control device 100 does not include the learning unit 1002, and acquires the prediction model from a device different from the measurement control device 100. Furthermore, there may be a case where the measurement control device 100 does not include the learning unit 1002 and the prediction unit 1003, and acquires the prediction result for the water level from a device different from the measurement control device 100.

### (Example of Predicting Change in Water Level)

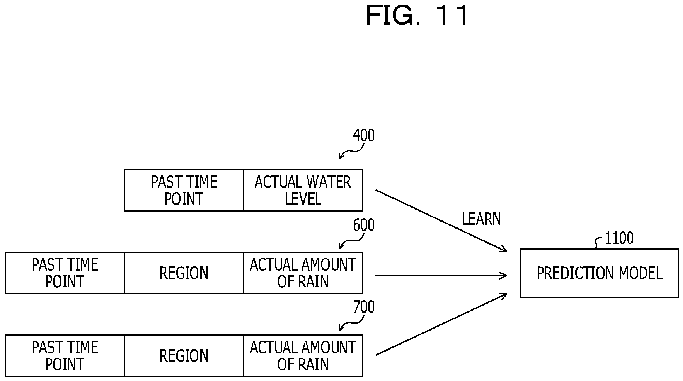

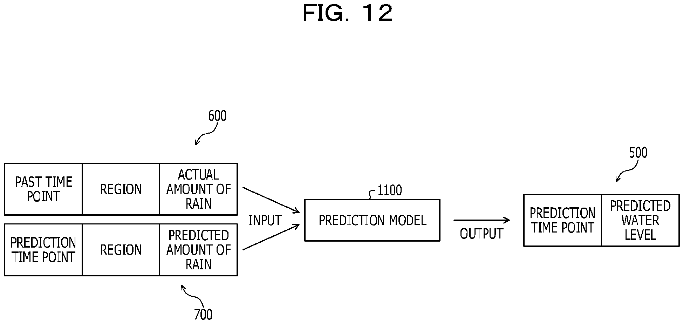

Next, an operation example of the monitoring system 200 will be described with reference to FIGS. 11 to 21. First, an example in which the measurement control device 100 predicts a change in water level will be described with reference to FIGS. 11 and 12.

FIGS. 11 and 12 are explanatory diagrams illustrating an example of predicting a change in water level. In FIG. 11, the measurement control device 100 learns a prediction model 1100 used to predict a change in the water level of the pipe 110. The prediction model 1100 is, for example, a mathematical expression model representing a relationship between the water level of the pipe 110 and the amount of rain in one or more regions at one or more time points. The measurement control device 100 learns the prediction model 1100 with reference to, for example, the actual water level table 400, the actual rain amount table 600, and the predicted rain amount table 700.

Specifically, the measurement control device 100 analyzes, by machine learning, which region has the amount of rain that affects the water level of the pipe 110 at a time point t, and which time point before the time point t has the amount of rain that affects the water level of the pipe 110 at the time point t, for example. The region whose amount of rain affects the water level of the pipe 110 is, for example, at least any one region out of a region where the pipe 110 is located, a region where a pipe laid upstream of the pipe 110 is located, and the like.

Then, based on the analysis result, the measurement control device 100 creates a mathematical expression model that predicts the water level of the pipe 110 at the time point t based on the amounts of rain in several regions at time points t-1, t-2,..., and t-n. Consequently, the measurement control device 100 can make a change in water level predictable. Furthermore, the measurement control device 100 may periodically re-create the mathematical expression model to achieve the improvement in accuracy of predicting a change in water level.

Here, the case where the measurement control device 100 refers to the actual water level table 400, the actual rain amount table 600, and the predicted rain amount table 700 has been described, but the present invention is not limited to this. For example, there may be a case where the measurement control device 100 does not refer to the actual rain amount table 600. Furthermore, for example, there may be a case where the measurement control device 100 does not refer to the predicted rain amount table 700. Next, description of FIG. 12 will be made.

In FIG. 12, the measurement control device 100 periodically predicts a change in water level for a certain period thereafter. For example, based on the actual rain amount table 600 and the predicted rain amount table 700, the measurement control device 100 refers to the prediction model 1100 to predict a change in water level at each time point t+i within a certain period, and stores results of the prediction using the predicted water level table 500. The reference sign i denotes a natural number equal to or larger than one.

Specifically, the measurement control device 100 refers to the mathematical expression model, and calculates the water level at the time point t+i based on the predicted water levels in one or more regions at the time points t+1, t+2,..., and t+i, and the actual water levels in one or more regions at the time points t-j, t-j+1,..., and t. Consequently, the measurement control device 100 can predict a change in water level for a certain period thereafter, and can enable the specification of the predicted peak value of the water level that serves as an index value for evaluating the degree of likelihood of the occurrence of flood damage.

Here, the case where the measurement control device 100 predicts the water level based on the predicted water level and the actual water level has been described, but the present invention is not limited to this. For example, there may be a case where the measurement control device 100 predicts the water level based on the actual water level without using the predicted water level. Furthermore, for example, there may be a case where the measurement control device 100 predicts the water level based on the predicted water level without using the actual water level.

### (Example of Designating Threshold Value and Measurement Interval)

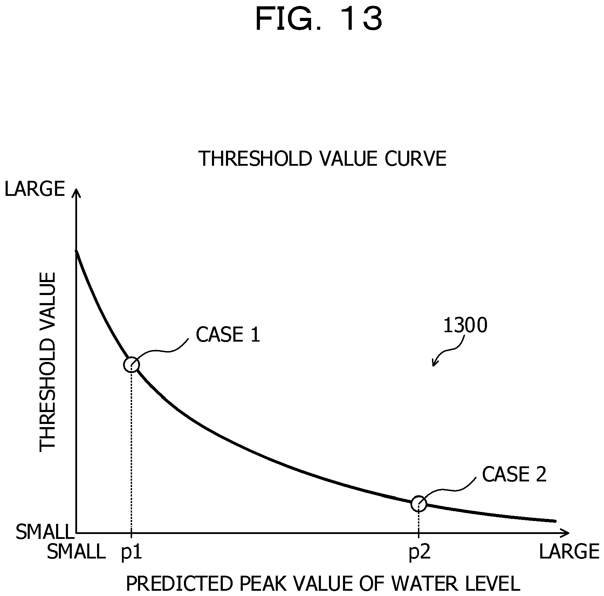

Next, an example in which the measurement control device 100 designates a threshold value and the measurement interval based on the prediction result for a change in water level will be described with reference to FIGS. 13 to 17.

FIGS. 13 to 17 are explanatory diagrams illustrating an example of designating the threshold value and the measurement interval. In FIG. 13, the measurement control device 100 stores the function of a threshold value curve 1300 as correspondence information representing a relationship between the predicted peak value of the water level and the threshold value. The threshold value corresponds to the first reference value that causes the sensor device 101 to start measuring the water level. The threshold value also corresponds to the second reference value that causes the sensor device 101 to end measuring the water level. The function of the threshold value curve 1300 is specified by the user, for example, and stored in the measurement control device 100.

Based on the function of the threshold value curve 1300, the measurement control device 100 calculates a threshold value corresponding to the predicted peak value of the water level specified from the prediction result for a change in water level for a certain period. For example, when the predicted peak value p1 in Case 1 is specified, the measurement control device 100 calculates a comparably large threshold value. On the other hand, for example, when the predicted peak value p2 in Case 2 is specified, the measurement control device 100 calculates a comparably small threshold value.

Consequently, the measurement control device 100 can hasten the start timing at which the measurement of the water level is started, as the predicted peak value is larger and flood damage is more likely to occur, such that countermeasures against flood damage can be taken efficiently. Furthermore, the measurement control device 100 can delay the start timing at which the measurement of the water level is started, as the predicted peak value is smaller and flood damage is less likely to occur, and thus can achieve the reduction of the processing load, amount of communication, and power consumption of the sensor device 101.

Here, the case where the threshold value curve 1300 has a curve to the lower right has been described, but the present invention is not limited to this. For example, the threshold value curve 1300 may have a curve in which the threshold value is given as a comparably large constant value in a range where the predicted peak value is smaller than a predetermined value, and the threshold value becomes smaller once the predicted peak value falls within a range where predicted peak value is larger than the predetermined value. Consequently, the measurement control device 100 can achieve the reduction of the processing load, amount of communication, and power consumption of the sensor device 101 while the predicted peak value is smaller than the predetermined value and the likelihood of the occurrence of flood damage is equal to or less than a certain value.

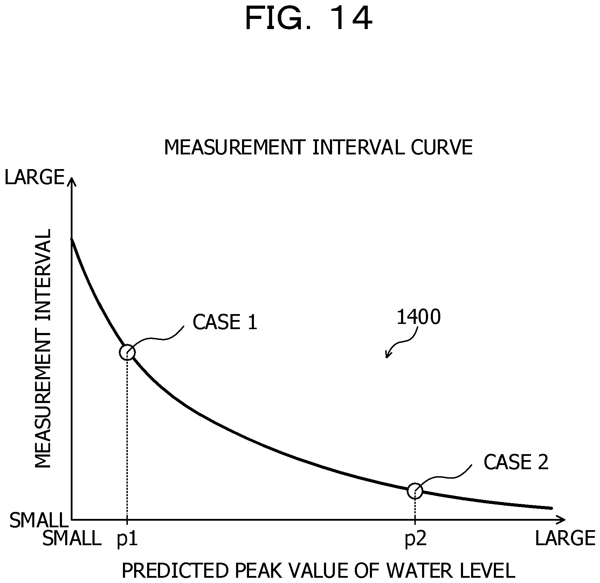

Furthermore, for example, the threshold value curve 1300 may have a curve in which the threshold value becomes larger from when the predicted peak value is zero until becoming a predetermined value, and the threshold value becomes smaller once the predicted peak value becomes larger than the predetermined value. Consequently, the measurement control device 100 can achieve the reduction of the processing load, amount of communication, and power consumption of the sensor device 101 while the predicted peak value is smaller than the predetermined value and the likelihood of the occurrence of flood damage is equal to or less than a certain value. Next, description of FIG. 14 will be made.

In FIG. 14, the measurement control device 100 stores the function of a measurement interval curve 1400 as correspondence information representing a relationship between the predicted peak value of the water level and the measurement interval. The measurement interval is a set value for controlling the frequency of measurement of the water level of the sensor device 101. The function of the measurement interval curve 1400 is specified by the user, for example, and stored in the measurement control device 100.

Based on the function of the measurement interval curve 1400, the measurement control device 100 calculates a measurement interval corresponding to the predicted peak value of the water level specified from the prediction result for a change in water level for a certain period. For example, when the predicted peak value p1 in Case 1 is specified, the measurement control device 100 calculates a comparably large measurement interval. On the other hand, for example, when the predicted peak value p2 in Case 2 is specified, the measurement control device 100 calculates a comparably small measurement interval.

Consequently, the measurement control device 100 can make the frequency of measurement of the water level greater as the predicted peak value is larger and flood damage is more likely to occur, such that countermeasures against flood damage can be taken efficiently. Furthermore, the measurement control device 100 can make the frequency of measurement of the water level smaller as the predicted peak value is smaller and flood damage is less likely to occur, and thus can achieve the reduction of the processing load, amount of communication, and power consumption of the sensor device 101.

Here, the case where the measurement interval curve 1400 has a curve to the lower right has been described, but the present invention is not limited to this. For example, the measurement interval curve 1400 may have a curve in which the measurement interval is given as a comparably large constant value in a range where the predicted peak value is smaller than a predetermined value, and the measurement interval becomes smaller once the predicted peak value falls within a range where predicted peak value is larger than the predetermined value. Consequently, the measurement control device 100 can achieve the reduction of the processing load, amount of communication, and power consumption of the sensor device 101 while the predicted peak value is smaller than the predetermined value and the likelihood of the occurrence of flood damage is equal to or less than a certain value.

Furthermore, for example, the measurement interval curve 1400 may have a curve in which the measurement interval becomes larger from when the predicted peak value is zero until becoming a predetermined value, and the measurement interval becomes smaller once the predicted peak value becomes larger than the predetermined value. Consequently, the measurement control device 100 can achieve the reduction of the processing load, amount of communication, and power consumption of the sensor device 101 while the predicted peak value is smaller than the predetermined value and the likelihood of the occurrence of flood damage is equal to or less than a certain value.

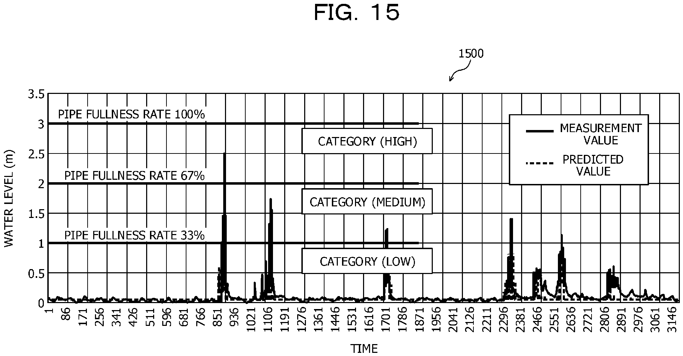

In the examples in FIGS. 13 and 14, the case where the measurement control device 100 designates the threshold value and the measurement interval based on the function of the threshold value curve 1300 and the function of the measurement interval curve 1400 has been described, but the present invention is not limited to this. For example, there is a case where it is difficult for the user to specify the function of the threshold value curve 1300 or the function of the measurement interval curve 1400 in advance. In this case, the measurement control device 100 designates the threshold value and the measurement interval, as described later with reference to FIGS. 15 to 17.

In FIG. 15, the user sets a plurality of water level categories with reference to a graph 1500 containing past measurement values and predicted values of the water level. In the example in FIG. 15, the user sets a category (low) of a water level with a pipe fullness rate of 0% or more and less than 33%, a category (medium) of a water level with a pipe fullness rate of 33% or more and less than 67%, and a category (high) of a water level with a pipe fullness rate of 67% or more. The pipe fullness rate is a ratio of the water level of the pipe 110 to a water level at which the pipe 110 is fully filled with water.

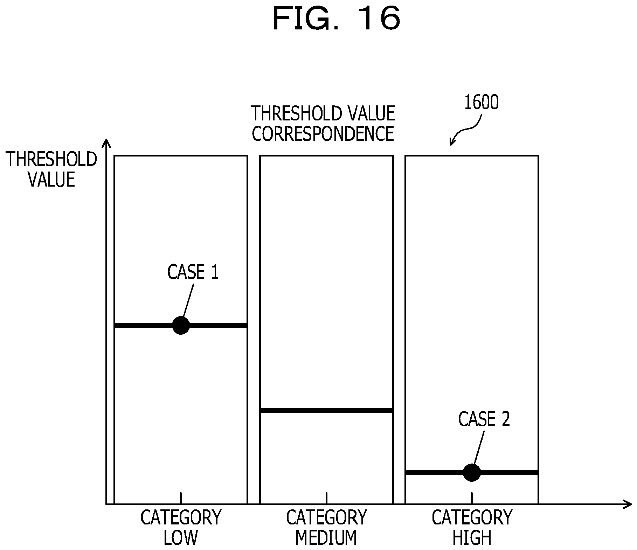

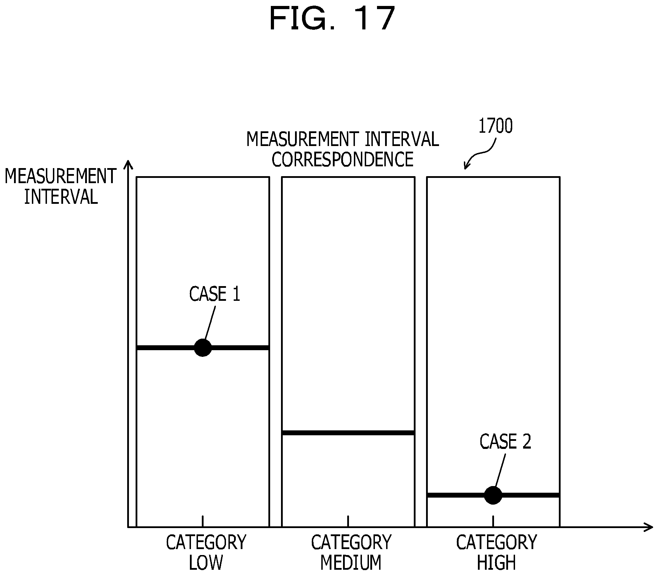

Then, the user creates correspondence information in which the threshold value and the measurement interval are associated with each other for each water level category, and causes the measurement control device 100 to store the created correspondence information as the reference value table 800. The user creates correspondence information in which, for example, a category with a larger upper limit value is associated with a threshold value with a larger value and a measurement interval with a larger value. Next, description of FIGS. 16 and 17 will be made; an example of designating a threshold value and a measurement interval based on the reference value table 800 will be described.

In FIG. 16, the measurement control device 100 calculates a threshold value corresponding to a predicted peak value of the water level specified from the prediction result for a change in water level for a certain period, based on a correspondence 1600 between the predicted peak value of the water level and the threshold value represented by the reference value table 800.

For example, when the predicted peak value p1 in Case 1 is specified, the measurement control device 100 calculates a comparably large threshold value corresponding to the category (low) containing the predicted peak value p1. On the other hand, for example, when the predicted peak value p2 in Case 2 is specified, the measurement control device 100 calculates a comparably small threshold value corresponding to the category (high) containing the predicted peak value p2.

Consequently, the measurement control device 100 can hasten the start timing at which the measurement of the water level is started, as the predicted peak value is larger and flood damage is more likely to occur, such that countermeasures against flood damage can be taken efficiently. Furthermore, the measurement control device 100 can delay the start timing at which the measurement of the water level is started, as the predicted peak value is smaller and flood damage is less likely to occur, and thus can achieve the reduction of the processing load, amount of communication, and power consumption of the sensor device 101. Next, description of FIG. 17 will be made.

In FIG. 17, the measurement control device 100 calculates a measurement interval corresponding to a predicted peak value of the water level specified from the prediction result for a change in water level for a certain period, based on a correspondence 1700 between the predicted peak value of the water level and the measurement interval represented by the reference value table 800.

For example, when the predicted peak value p1 in Case 1 is specified, the measurement control device 100 calculates a comparably large measurement interval corresponding to the category (low) containing the predicted peak value p1. On the other hand, for example, when the predicted peak value p2 in Case 2 is specified, the measurement control device 100 calculates a comparably small measurement interval corresponding to the category (high) containing the predicted peak value p2.

Consequently, the measurement control device 100 can make the frequency of measurement of the water level greater as the predicted peak value is larger and flood damage is more likely to occur, such that countermeasures against flood damage can be taken efficiently. Furthermore, the measurement control device 100 can make the frequency of measurement of the water level smaller as the predicted peak value is smaller and flood damage is less likely to occur, and thus can achieve the reduction of the processing load, amount of communication, and power consumption of the sensor device 101.

In FIG. 15, the user may consider that the importance of the water level in fine weather or cloudy weather is lower for the purpose of countermeasures against flood damage, and thus may make the upper limit value of the category (low) at least larger than the maximum value of the measurement value of the water level in fine weather or cloudy weather. Consequently, the user can achieve the reduction of the processing load, amount of communication, and power consumption of the sensor device 101.

In addition, in a case where, for example, the predicted value is comparably small but flood damage is more likely to occur as a result of referring to the graph 1500 because a difference between the measurement value and the predicted value is larger, and the measurement value tends to be larger than the predicted value, the user may make the lower limit value of the category (high) smaller. Consequently, the user can facilitate monitoring of the occurrence of flood damage, and can achieve the improvement in efficiency of countermeasures against flood damage.

Furthermore, the user may refer to past measurement values and the like of the water level in the graph 1500 to perform approximation using the Poisson distribution and calculate the probability that the measurement value of the water level belongs to each of the water level categories, and may calculate the number of times of measurement for a long term. Consequently, the user can predict long-term processing load, amount of communication, power consumption, and the like of the sensor device 101, and can facilitate the maintenance management of the monitoring system 200.

### (Example of Controlling Sensor Device 101)

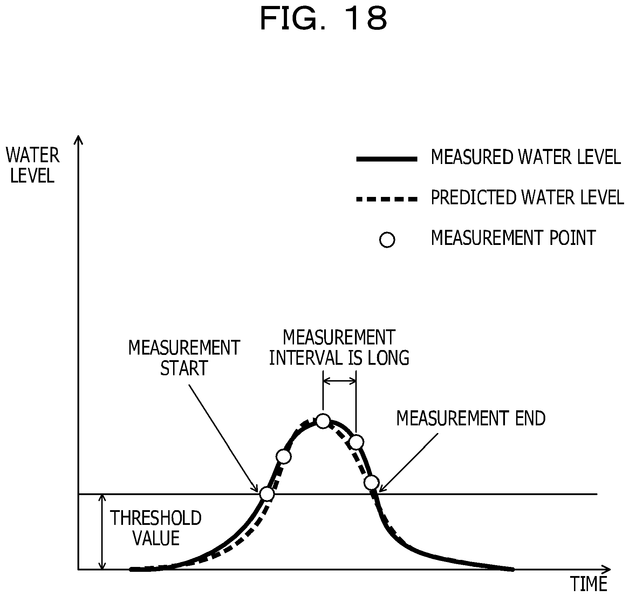

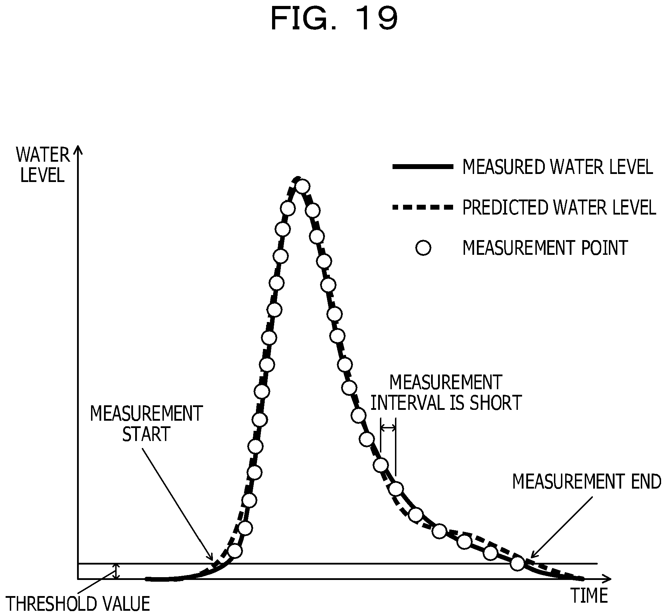

Next, an example in which the measurement control device 100 controls the sensor device 101 based on the threshold value and the measurement interval designated in FIGS. 13 to 17 will be described with reference to FIGS. 18 and 19.

FIGS. 18 and 19 are explanatory diagrams illustrating an example of controlling the sensor device 101. The example in FIG. 18 corresponds to an example of a case where the measurement control device 100 calculates a threshold value and a measurement interval corresponding to the category (low) containing the predicted peak value p1 in Case 1. In FIG. 18, the measurement control device 100 can delay the start of measurement because the threshold value is comparably large, can make the frequency of measurement smaller because the measurement interval is comparably large, and can hasten the end of measurement because the threshold value is comparably large.

In this manner, in Case 1 in which it is deemed that the predicted peak value is comparably small and the importance in countermeasures against flood damage is comparably low, the measurement control device 100 can achieve the reduction of the processing load, amount of communication, and power consumption of the sensor device 101. Furthermore, even if the start of measurement is delayed and the frequency of measurement is made smaller, the measurement control device 100 can suppress adverse influence on countermeasures against flood damage. Next, description of FIG. 19 will be made.

The example in FIG. 19 corresponds to an example of a case where the measurement control device 100 calculates a threshold value and a measurement interval corresponding to the category (high) containing the predicted peak value p2 in Case 2. In FIG. 19, the measurement control device 100 can hasten the start of measurement because the threshold value is comparably small, can make the frequency of measurement greater because the measurement interval is comparably small, and can delay the end of measurement because the threshold value is comparably small.

In this manner, in Case 2 in which it is deemed that the predicted peak value is comparably large and the importance in countermeasures against flood damage is comparably high, the measurement control device 100 can hasten the start of measurement and make the frequency of measurement greater. For this reason, the measurement control device 100 can facilitate the user to grasp a timing at which the water level rises, a speed at which the water level rises, and the like, and can allow countermeasures against flood damage to be efficiently carried out.

Furthermore, the measurement control device 100 can facilitate the user to grasp a change in measurement value of the water level around a timing at which the water level matches the peak value, and can allow countermeasures against flood damage to be efficiently carried out. In addition, the measurement control device 100 can facilitate the user to grasp a change in measurement value of the water level from immediately after the water level begins to rise until immediately before the water level is completely decreased, and can allow information useful for future countermeasures against flood damage to be utilized easily.

### (Example of Displaying Screen)

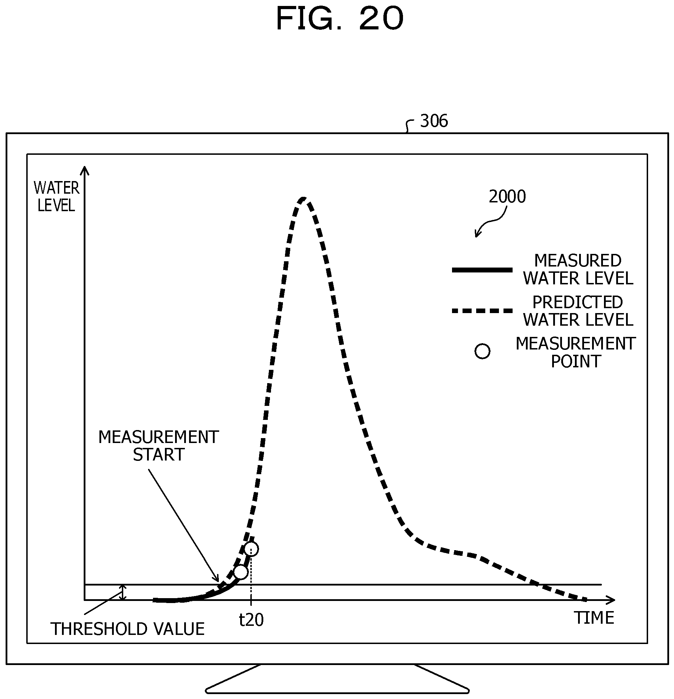

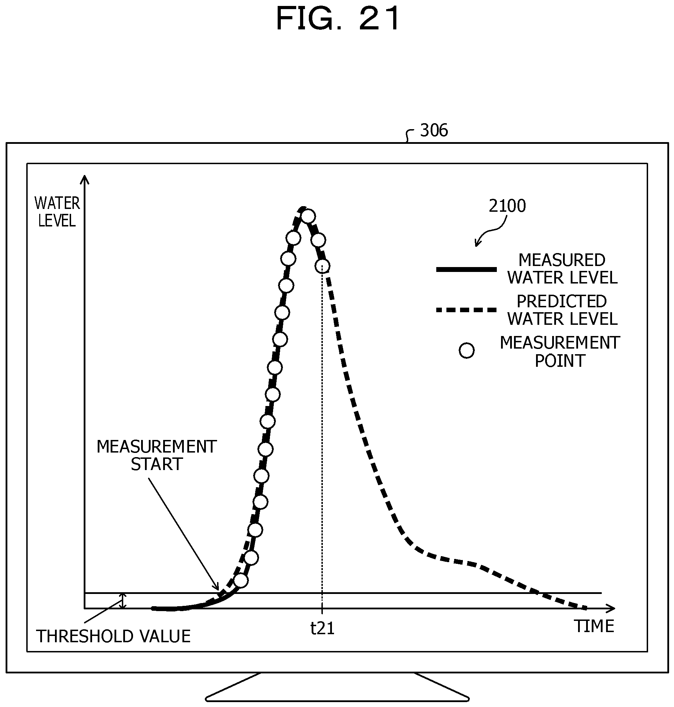

Next, an example in which the measurement control device 100 displays a screen when controlling the sensor device 101 as in FIG. 19 will be described with reference to FIGS. 20 and 21.

FIGS. 20 and 21 are explanatory diagrams illustrating an example of displaying a screen. The measurement control device 100 controls the sensor device 101, and causes the display contents of the screen of the display 306 to shift every time the measurement value of the water level is acquired from the sensor device 101.

In FIG. 20, the measurement control device 100 displays a screen 2000, for example, when acquiring the measurement value of the water level at a time point t20. The screen 2000 displays, for example, a dotted line representing a change in predicted value of the water level, a white circle representing the measurement value of the water level, and a solid line representing a change in measurement value of the water level. Furthermore, the screen 2000 may display the designated threshold value or the measurement start point.

With this display, when it is deemed that flood damage is highly likely to occur, the user can begin to grasp a change in water level immediately after the water level begins to rise, and can grasp the magnitude of a difference between the measurement value of the water level and the predicted value of the water level. Therefore, when the measurement value of the water level is larger than the predicted value of the water level and it is considered that flood damage is more likely to occur than the prediction result, the user is allowed to carry out countermeasures against flood damage at an early stage. Next, description of FIG. 21 will be made.

In FIG. 21, the measurement control device 100 displays a screen 2100, for example, when acquiring the measurement value of the water level at a time point t21. The screen 2100 displays, for example, a dotted line representing a change in predicted value of the water level, a white circle representing the measurement value of the water level, and a solid line representing a change in measurement value of the water level. Furthermore, the screen 2100 may display the designated threshold value or the measurement start point.

With this display, when it is deemed that flood damage is highly likely to occur, the user can grasp a change in measurement value of the water level around a timing at which the water level matches the peak value, such that countermeasures against flood damage can be allowed to be carried out efficiently. The user can grasp, for example, whether or not the pipe 110 is fully filled with water, or can grasp the length of a period during which the pipe 110 is kept fully filled with water. In addition, the user can grasp a change in measurement value of the water level from immediately after the water level begins to rise until immediately before the water level is completely decreased, and can make use of the grasped change for future countermeasures against flood damage.

### (Overall Processing Procedure)

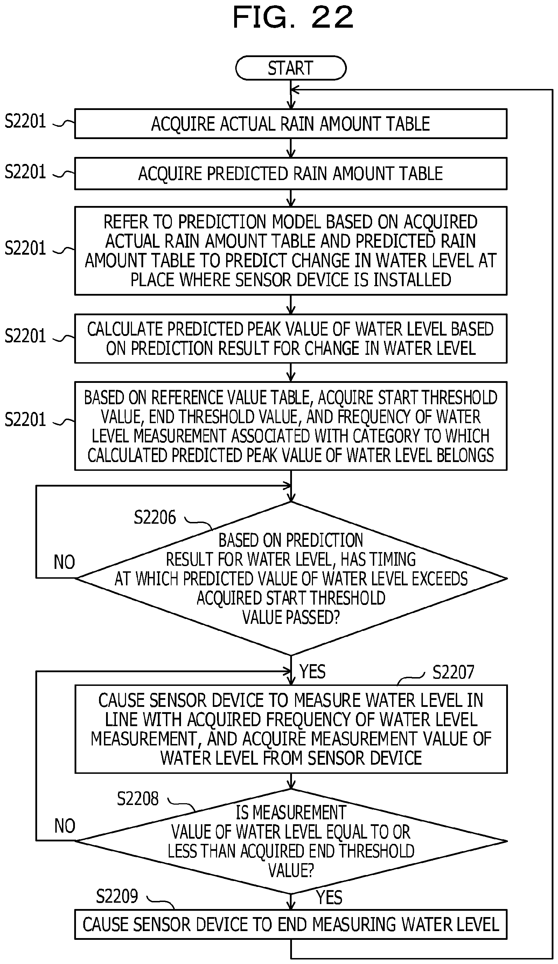

Next, an example of an overall processing procedure executed by the measurement control device 100 will be described with reference to FIG. 22. The overall processing is implemented by, for example, the CPU 301, a storage area such as the memory 302 and the recording medium 305, and the network I/F 303 illustrated in FIG. 3.

FIG. 22 is a flowchart illustrating an example of an overall processing procedure. In FIG. 22, first, the measurement control device 100 acquires the actual rain amount table 600 (Step S2201). Next, the measurement control device 100 acquires the predicted rain amount table 700 (Step S2202). Then, the measurement control device 100 refers to the prediction model based on the acquired actual rain amount table 600 and predicted rain amount table 700 to predict a change in water level at a place where the sensor device 101 is installed (Step S2203).

Next, the measurement control device 100 calculates the predicted peak value of the water level based on the prediction result for a change in water level (Step S2204). Then, based on the reference value table 800, the measurement control device 100 acquires a start threshold value, an end threshold value, and the frequency of the water level measurement associated with a category to which the calculated predicted peak value of the water level belongs (Step S2205) .

Next, the measurement control device 100 determines whether or not a timing at which the predicted value of the water level exceeds the acquired start threshold value has passed, based on the prediction result for the water level (Step S2206). Here, when the timing has not passed (Step S2206: No), the measurement control device 100 returns to the processing in Step S2206. On the other hand, when the timing has passed (Step S2206: Yes), the measurement control device 100 proceeds to the processing in Step S2207.

In Step S2207, the measurement control device 100 causes the sensor device 101 to measure the water level in line with the acquired frequency of the water level measurement, and acquires the measurement value of the water level from the sensor device 101 (Step S2207).

Next, the measurement control device 100 determines whether or not the measurement value of the water level is equal to or less than the acquired end threshold value (Step S2208). Here, when the measurement value is not equal to or less than the end threshold value (Step S2208: No), the measurement control device 100 returns to the processing in Step S2207. On the other hand, when the measurement value is equal to or less than the end threshold value (Step S2208: Yes), the measurement control device 100 proceeds to the processing in Step S2209.

In Step S2209, the measurement control device 100 causes the sensor device 101 to end measuring the water level (Step S2209). Then, the measurement control device 100 proceeds to the processing in Step S2201. With this procedure, the measurement control device 100 can cause the sensor device 101 to efficiently measure the water level.

As described above, according to the measurement control device 100, the predicted peak value of the water level can be specified based on the prediction result for a change in water level, and the first reference value of the water level at which the measurement of the water level is started can be calculated according to the specified predicted peak value. According to the measurement control device 100, the predicted timing at which the water level is predicted to reach the calculated first reference value can be specified based on the prediction result, and the start timing of the water level measurement by the sensor device 101 can be controlled based on the specified predicted timing.

Consequently, the measurement control device 100 can control the start timing of the water level measurement according to the predicted peak value of the water level that serves as an index value for evaluating the degree of likelihood of the occurrence of flood damage, and can allow the improvement in efficiency of the water level measurement to be achieved. For this reason, the measurement control device 100 can allow the improvement in efficiency of countermeasures against flood damage, or the reduction of the processing load, amount of communication, and power consumption of the sensor device 101 to be achieved.

According to measurement control device 100, the first reference value can be calculated such that the larger the predicted peak value is, the lower the first reference value is. Consequently, the measurement control device 100 can hasten the start timing at which the measurement of the water level is started, as flood damage is more likely to occur, such that countermeasures against flood damage can be taken efficiently. Furthermore, the measurement control device 100 can delay the start timing at which the measurement of the water level is started, as flood damage is less likely to occur, and thus can achieve the reduction of the processing load, amount of communication, and power consumption of the sensor device 101.

According to the measurement control device 100, the frequency of measurement of the water level by the sensor device 101 can be made higher as the predicted peak value is larger. Consequently, the measurement control device 100 can make the frequency of measurement of the water level greater as flood damage is more likely to occur, such that countermeasures against flood damage can be taken efficiently. In addition, the measurement control device 100 can make the frequency of measurement of the water level smaller as flood damage is less likely to occur, and thus can achieve the reduction of the processing load, amount of communication, and power consumption of the sensor device 101.

According to the measurement control device 100, based on correspondence information in which, among a plurality of ranges that do not overlap each other, a range with a relatively smaller upper limit value is associated with a relatively larger first reference value, a first reference value associated with a range containing the specified predicted peak value can be calculated. Consequently, the measurement control device 100 can allow the first reference value to be calculated without specifying a function representing a relationship between the predicted peak value and the first reference value.

According to measurement control device 100, the upper limit value of each of the plurality of ranges can be set to a value that is at least larger than the maximum value of the measurement value of the water level in fine weather or cloudy weather. Consequently, the measurement control device 100 can delay the start timing at which the measurement of the water level is started, as flood damage is less likely to occur, and thus can efficiently reduce the processing load, amount of communication, and power consumption of the sensor device 101.

According to the measurement control device 100, the end timing of the water level measurement by the sensor device 101 can be controlled based on the measurement value of the water level by the sensor device 101. Consequently, the measurement control device 100 can delay the end timing at which the measurement of the water level is ended, as flood damage is more likely to occur, such that countermeasures against flood damage can be taken efficiently. Furthermore, the measurement control device 100 can hasten the end timing at which the measurement of the water level is ended, as flood damage is less likely to occur, and thus can achieve the reduction of the processing load, amount of communication, and power consumption of the sensor device 101.

According to the measurement control device 100, the second reference value of the water level at which the measurement of the water level is ended can be calculated according to the specified predicted peak value. According to the measurement control device 100, the end timing can be controlled based on a timing at which the measurement value falls below the calculated second reference value. Consequently, the measurement control device 100 can change the end timing depending on the second reference value.

According to the measurement control device 100, the predicted power consumption of the sensor device 101 can be calculated based on statistical information on a change in water level during a certain period. According to the measurement control device 100, the calculated predicted power consumption can be output. Consequently, the measurement control device 100 can facilitate the user to maintain and manage the monitoring system 200.

According to the measurement control device 100, a prediction model representing a relationship between the water level and the amount of rain can be learned based on the past water level and amount of rain. According to the measurement control device 100, a change in water level can be predicted based on the predicted value of the amount of rain with reference to the learned prediction model. Consequently, the measurement control device 100 can automatically predict a change in water level.

Note that the measurement control method described in this embodiment can be implemented by executing a prepared program on a computer such as a personal computer or a workstation. The measurement control program described in the present embodiment is recorded on a computer-readable recording medium such as a hard disk, flexible disk, compact disk read only memory (CD-ROM), magneto-optical disk (MO), or digital versatile disc (DVD), and is read from the recording medium to be executed by the computer. Furthermore, the measurement control program described in the present embodiment may be distributed via a network such as the Internet.

### REFERENCE SIGNS LIST

- 100: Measurement control device
- 101: Sensor device
- 110: Pipe
- 200: Monitoring system
- 201: Information accumulation device
- 202: Communication relay device
- 203: Wireless communication device
- 210: Network
- 300, 900: Bus
- 301, 901: CPU
- 302, 902: Memory
- 303, 903: Network I/F
- 304: Recording medium I/F
- 305: Recording medium
- 306: Display
- 400: Actual water level table
- 500: Predicted water level table
- 600: Actual rain amount table
- 700: Predicted rain amount table
- 800: Reference value table
- 904: Water level sensor
- 905: Battery
- 1000: Storage unit
- 1001: Acquisition unit
- 1002: Learning unit
- 1003: Prediction unit
- 1004: Setting unit
- 1005: Output unit
- 1300: Threshold value curve
- 1400: Measurement interval curve
- 1500: Graph
- 1600, 1700: Correspondence
- 2000, 2100: Screen

## Claims

1. A measurement control program that controls a sensor that measures a water level,
the measurement control program causing a computer to execute processing comprising:
specifying a predicted peak value of the water level based on a prediction result for a change in the water level;
calculating a reference value of the water level at which measurement of the water level is started, according to the predicted peak value that has been specified;
specifying a timing at which the water level is predicted to reach the reference value that has been calculated, based on the prediction result; and
controlling a start timing of measurement of the water level by the sensor based on the timing that has been specified.

2. The measurement control program according to claim 1, wherein, in the processing of calculating the reference value, the reference value is calculated such that the larger the predicted peak value is, the lower the reference value is.

3. The measurement control program according to claim 1, the measurement control program causing the computer to execute processing of making a frequency of measurement of the water level by the sensor higher as the predicted peak value is larger.

4. The measurement control program according to claim 2, wherein, in the processing of calculating the reference value, based on correspondence information in which, among a plurality of ranges that do not overlap each other, a range with a relatively smaller upper limit value is associated with a relatively larger reference value, a reference value associated with a range that contains the predicted peak value that has been specified is calculated.

5. The measurement control program according to claim 4, wherein an upper limit value of each of the plurality of ranges is a value that is at least larger than a maximum value of a measurement value of the water level in fine weather or cloudy weather.

6. The measurement control program according to any one of claims 1 to 5, the measurement control program causing the computer to execute processing of controlling an end timing of measurement of the water level by the sensor based on a measurement value of the water level by the sensor.

7. The measurement control program according to claim 6, the measurement control program causing the computer to execute processing of calculating a second reference value of the water level at which measurement of the water level is ended, according to the predicted peak value that has been specified, wherein
in the processing of controlling the end timing, the end timing is controlled based on a timing at which the measurement value falls below the second reference value that has been calculated.

8. The measurement control program according to any one of claims 1 to 7, the measurement control program causing the computer to execute processing comprising:
calculating predicted power consumption of the sensor based on statistical information on a change in the water level during a certain period; and
outputting the predicted power consumption that has been calculated.

9. The measurement control program according to any one of claims 1 to 8, the measurement control program causing the computer to execute processing comprising:
learning a prediction model that represents a relationship between the water level and an amount of rain, based on past water level and amount of rain; and
predicting a change in the water level with reference to the prediction model that has been learned, based on a predicted value of the amount of rain.

10. A measurement control method that controls a sensor that measures a water level,
the measurement control method comprising processing, executed by a computer, of:
specifying a predicted peak value of the water level based on a prediction result for a change in the water level;
calculating a reference value of the water level at which measurement of the water level is started, according to the predicted peak value that has been specified;
specifying a timing at which the water level is predicted to reach the reference value that has been calculated, based on the prediction result; and
controlling a start timing of measurement of the water level by the sensor based on the timing that has been specified.

11. A measurement control device that controls a sensor that measures a water level,
the measurement control device comprising a controller that:
specifies a predicted peak value of the water level based on a prediction result for a change in the water level;
calculates a reference value of the water level at which measurement of the water level is started, according to the predicted peak value that has been specified;
specifies a timing at which the water level is predicted to reach the reference value that has been calculated, based on the prediction result; and
controls a start timing of measurement of the water level by the sensor based on the timing that has been specified.

12. A measurement control program that controls a sensor that measures a water level,
the measurement control program causing a computer to execute processing comprising:
specifying a predicted peak value of the water level based on a prediction result for a change in the water level; and
controlling a frequency of measurement of the water level by the sensor according to the predicted peak value that has been specified.

13. A measurement control method that controls a sensor that measures a water level,
the measurement control method comprising processing, executed by a computer, of:
specifying a predicted peak value of the water level based on a prediction result for a change in the water level; and
controlling a frequency of measurement of the water level by the sensor according to the predicted peak value that has been specified.

14. A measurement control device that controls a sensor that measures a water level,
the measurement control device comprising a controller that:
specifies a predicted peak value of the water level based on a prediction result for a change in the water level; and
controls a frequency of measurement of the water level by the sensor according to the predicted peak value that has been specified.

15. A measurement control system comprising:
a sensor that measures a water level; and a measurement control device that controls the sensor, wherein
the measurement control device:
specifies a predicted peak value of the water level based on a prediction result for a change in the water level;
calculates a reference value of the water level at which measurement of the water level is started, according to the predicted peak value that has been specified;
specifies a timing at which the water level is predicted to reach the reference value that has been calculated, based on the prediction result; and
controls a start timing of measurement of the water level by the sensor based on the timing that has been specified, and
the sensor
starts measuring the water level under control of the measurement control device.
